# EUROPÄISCHE PATENTANMELDUNG

(11) **EP 1 760 623 A2**
(43) Veröffentlichungstag der Anmeldung: **07.03.2007**
(21) Anmeldenummer: 06116809.2
(22) Anmeldetag: 07.07.2006
(51) Int. Cl.: G06F 21/24

(54) **Sicherheitseinrichtung für elektronische Geräte**

(30) Priorität: 18.08.2005 DE 102005039128
(71) Anmelder: SIEMENS AKTIENGESELLSCHAFT, 80333 München (DE)
(72) Erfinder: Grill, Thomas, 78048, Villingen-Schwenningen (DE); Rombach, Gerhard, 78098, Triberg (DE)

(57) **Zusammenfassung**

Bei einer Sicherheitseinrichtung für elektronische Geräte in einem Fahrzeug ist vorgesehen, dass ein Sicherheitsmodul mit einem Datenspeicher nur nach vorheriger Authentifikation zugänglich ist, dass im Datenspeicher Signaturen von Daten der Geräte abgelegt sind und dass Mittel zum Vergleich der abgelegten Daten mit den jeweils aus den Geräten ausgelesenen Daten vorgesehen sind.

## Beschreibung

Die Erfindung betrifft eine Sicherheitseinrichtung für elektronische Geräte in einem Fahrzeug.

Elektronische Geräte, insbesondere Steuergeräte für Motoren oder Getriebe, weisen oft sicherheitsrelevante Funktionen auf, die vor unautorisierten Zugriffen geschützt werden müssen, beispielsweise vor zulässigen Änderungen von Steuerkennlinien, Kilometerständen oder Programm-Codes. Um solche unzulässigen Zugriffe zu erkennen und die Funktion des betreffenden Gerätes zu blockieren, sind Diagnose-Abfragen, beispielsweise Security-Access nach ISO 14229, bekannt. Diese Technik bietet nur eine geringe Sicherheit, da solche Systeme einfach zu umgehen sind und Manipulationen letztendlich nicht nachvollziehbar sind.

Aufgabe der Erfindung ist es daher, eine sichere Erkennung von Manipulationen zu ermöglichen. Diese Aufgabe wird bei der erfindungsgemäßen Sicherheitseinrichtung dadurch gelöst, dass ein Sicherheitsmodul mit einem Datenspeicher nur nach vorheriger Authentifikation zugänglich ist, dass im Datenspeicher Signaturen von Daten der Geräte abgelegt sind und dass Mittel zum Vergleich der abgelegten Daten mit den jeweils aus den Geräten ausgelesenen Daten vorgesehen sind.

Sicherheitsmodule sind an sich bekannt und enthalten in der Regel einen Prozessor und geeignete Speicher sowie Schnittstellen zur Kommunikation nach außen. Der Zugriff auf den Datenspeicher wird nach an sich bekannten Sicherheits-Algorithmen vom Prozessor gesteuert. Das Sicherheitsmodul ist vorzugsweise als integrierte Schaltung ausgeführt und kann beispielsweise in einem Steuergerät angeordnet sein.

In dem Sicherheitsmodul - im folgenden auch Trustbox genannt - können beliebige Daten der Geräte abgelegt werden, vorzugsweise ist jedoch vorgesehen, dass die Daten der Geräte für die Geräte typische Daten sind. Diese können beispielsweise Versionsbezeichnungen oder Hash-Dateien von in den Geräten verwendeten Programmen umfassen.

Ferner kann bei der Erfindung vorgesehen sein, dass zusammen mit den Daten eine Zeitangabe ablegbar ist. Damit kann dokumentiert werden, wann eine Änderung durchgeführt wurde, beispielsweise der Einbau oder Austausch eines Gerätes oder einer Software-Version.

Bei einigen Geräten werden Daten erzeugt bzw. verändert, welche für eine spätere Diagnose wichtig sind. Solche Daten sind beispielsweise der Kilometerstand oder Kennlinien, die entweder automatisch oder bei Wartungsarbeiten optimiert werden. Deshalb ist bei einer Weiterbildung vorgesehen, dass ferner in den Geräten vorliegende an sich veränderbare Daten im Datenspeicher ablegbar sind. So kann beispielsweise bei Wartungsarbeiten der jeweilige Kilometerstand abgelegt werden und bei einem späteren Zugriff auf das Sicherheitsmodul ausgelesen und auf Plausibilität überprüft werden.

Bei einer vorteilhaften Ausgestaltung ist vorgesehen, dass das Sicherheitsmodul eine Schnittstelle zu einem Rechner aufweist. Mit dem Rechner können die erforderlichen Daten zur Authentifikation erstellt und zum Sicherheitsmodul übertragen werden, die dort gespeicherten Signaturen ausgelesen und mit Signaturen der jeweils vorhandenen Geräte verglichen werden. Insbesondere bei verschiedenen Berechtigungen ist es vorteilhaft, wenn das Sicherheitsmodul ferner eine Schnittstelle für eine Smart-Card aufweist. Damit kann sich jeder Berechtigter durch seine Smart-Card authentifizieren.

Eine andere vorteilhafte Ausgestaltung besteht darin, dass das Sicherheitsmodul über ein Bus-System mit den Geräten verbindbar ist. Damit kann bei einem Zugriff auf das Sicherheitsmodul, beispielsweise im oben genannten Rechner, gleichzeitig eine Kommunikation mit den Geräten erfolgen. Dabei können insbesondere im Sicherheitsmodul Mittel zum Signieren von Daten, welche von der Geräten abgefragt werden, vorgesehen sein. Hierbei wird im anzuschließenden Rechner kein Programm zum Signieren der Daten benötigt. Die Erstellung der Signaturen der "Original-Geräte", die dann im Sicherheitsmodul abgelegt sind, und die Erstellung der Signaturen der zu vergleichenden Geräte erfolgen automatisch mit identischen Algorithmen.

Im praktischen Betrieb, beispielsweise in Werkstätten oder technischen Überwachungseinrichtungen, kann es für ansonsten unautorisierte Personen erforderlich sein, Daten auszulesen. Deshalb ist bei einer Weiterbildung der Erfindung vorgesehen, dass eine eingeschränkte Funktion des Sicherheitsmoduls auch ohne Authentifikation möglich ist.

Eine Möglichkeit, verschiedene Zugriffsrechte zu erteilen, besteht darin, dass für verschiedene Geräte verschiedene Authentifikations-Merkmale vorgesehen sind.

Die Fähigkeit des Sicherheitsmoduls zur Prüfung von Berechtigungen kann außer zur Überwachung der Geräte zu weiteren Zwecken dadurch angewendet werden, dass im Sicherheitsmodul weitere Funktionen implementiert sind, die einen hohen Datenschutz erfordern. Bei dieser Weiterbildung kann beispielsweise vorgesehen sein, dass die weiteren Funktionen eine Prüfung von verschlüsselten Fahrzeug-Zugangssignalen umfassen und/oder dass die weiteren Funktionen eine Wegfahrsperre enthalten.

Die Erfindung lässt zahlreiche Ausführungsformen zu. Eine davon ist schematisch in der Zeichnung anhand mehrerer Figuren dargestellt und nachfolgend beschrieben. Es zeigt:
- Fig. 1: ein Blockschaltbild der erfindungsgemäßen Sicherheitseinrichtung,
- Fig. 2: ein Flussdiagramm zur Erläuterung des Ablegens von Gerätedaten im Datenspeicher und
- Fig. 3: ein Flussdiagramm zur Erläuterung eines Prüfvorganges.

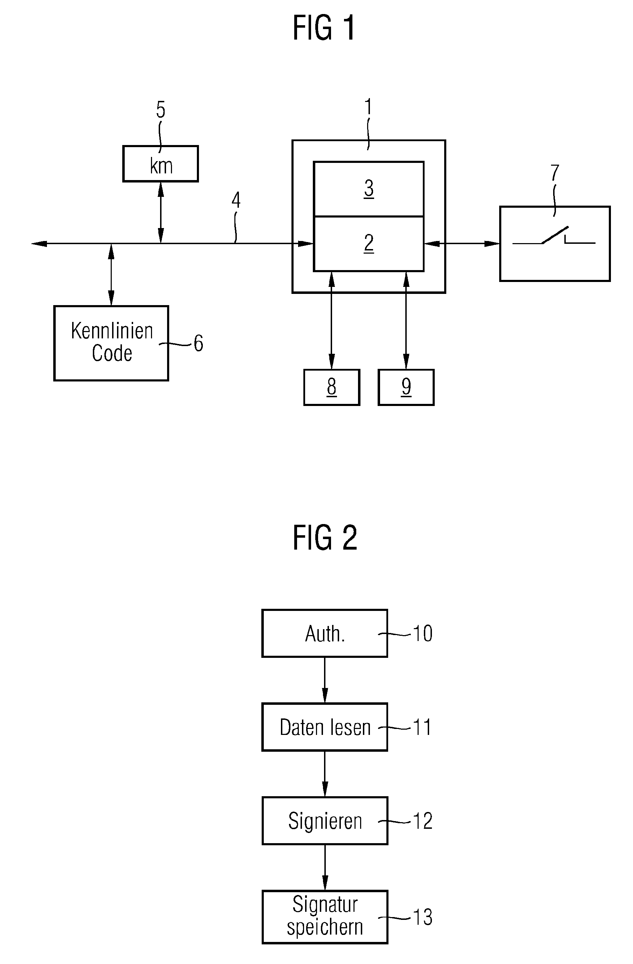

Die in Fig. 1 dargestellte Einrichtung weist eine Trustbox 1 auf mit einem eigentlichen Sicherheitsbereich, der einen Prozessor 2 und neben anderen nicht dargestellten Speichern für Programme und Konstanten einen Datenspeicher 3 enthält. Die Trustbox 1 ist über ein Bus-System 4 mit verschiedenen Geräten im Fahrzeug verbunden, von denen lediglich ein Kilometerzähler 5 und ein Motor-Management-Gerät 6 dargestellt sind. Als typische Daten sind im Motor-Management-Gerät 6 Kennlinien und ein Programm-Code abgelegt. Gemäß einer Weiterbildung der Erfindung ist die Trustbox 1 außerdem mit einem Keyless-Entry-System 7 verbunden, wobei die Trustbox 1 die Aufgabe hat, von einem beweglichen Datenträger empfangene Authentifikationsdaten zu überprüfen und gegebenenfalls freizugeben.

Die Trustbox 1 weist ferner eine Schnittstelle 8 zum Anschluss an einen Rechner und eine Schnittstelle 9 zur Verbindung mit einer Smart-Card auf, beispielsweise durch eine Steckverbindung oder einen Smart-Card-Einschub.

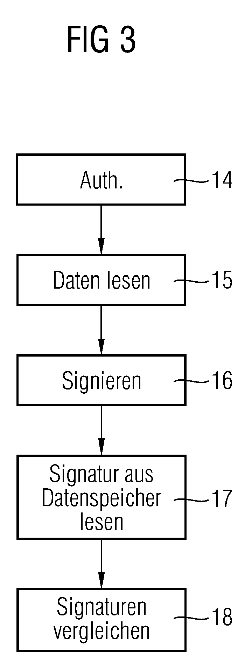

Fig. 2 zeigt den Ablauf beim Einbau von neuen oder beim Austausch von Geräten. Nach einer Authentifikation bei 10 werden bei 11 die Daten aus dem jeweiligen Gerät ausgelesen und bei 12 signiert. Bei 13 wird dann die Signatur im Datenspeicher 3 (Fig. 1) abgelegt. Zu einer späteren Überprüfung gemäß Fig. 3 werden nach einer Authentifikation bei 14 die Daten aus den Geräten gelesen und daraus bei 16 Signaturen gebildet. Diese werden mit bei 17 aus dem Datenspeicher 3 (Fig. 1) gelesenen Daten bei 18 verglichen. Das Ergebnis kann in geeigneter Weise angezeigt und dokumentiert werden.

## Patentansprüche

1. Sicherheitseinrichtung für elektronische Geräte in einem Fahrzeug, **dadurch gekennzeichnet, dass** ein Sicherheitsmodul (1) mit einem Datenspeicher (3) nur nach vorheriger Authentifikation zugänglich ist, dass im Datenspeicher (3) Signaturen von Daten der Geräte (5, 6) abgelegt sind und dass Mittel (2) zum Vergleich der abgelegten Daten mit den jeweils aus den Geräten (5, 6) ausgelesenen Daten vorgesehen sind.

2. Sicherheitseinrichtung nach Anspruch 1, **dadurch gekennzeichnet, dass** die Daten der Geräte (5, 6) für die Geräte (5, 6) typische Daten sind.

3. Sicherheitseinrichtung nach Anspruch 2, **dadurch gekennzeichnet, dass** die Daten Versionsbezeichnungen oder Hash-Dateien von in den Geräten (5, 6) verwendeten Programmen umfassen.

4. Sicherheitseinrichtung nach einem der vorhergehenden Ansprüche, **dadurch gekennzeichnet, dass** zusammen mit den Daten eine Zeitangabe ablegbar ist.

5. Sicherheitseinrichtung nach einem der vorhergehenden Ansprüche, **dadurch gekennzeichnet, dass** ferner in den Geräten (5, 6) vorliegende an sich veränderbare Daten im Datenspeicher (3) ablegbar sind.

6. Sicherheitseinrichtung nach einem der vorhergehenden Ansprüche, **dadurch gekennzeichnet, dass** das Sicherheitsmodul (1) eine Schnittstelle (8) zu einem Rechner aufweist.

7. Sicherheitseinrichtung nach Anspruch 6, **dadurch gekennzeichnet, dass** das Sicherheitsmodul (1) ferner eine Schnittstelle (9) für eine Smart-Card aufweist.

8. Sicherheitseinrichtung nach einem der vorhergehenden Ansprüche, **dadurch gekennzeichnet, dass** das Sicherheitsmodul (1) über ein Bus-System (4) mit den Geräten (5, 6) verbindbar ist.

9. Sicherheitseinrichtung nach Anspruch 8, **dadurch gekennzeichnet, dass** im Sicherheitsmodul (1) Mittel zum Signieren (2) von Daten, welche von der Geräten (5, 6) abgefragt werden, vorgesehen sind.

10. Sicherheitseinrichtung nach einem der vorhergehenden Ansprüche, **dadurch gekennzeichnet, dass** eine eingeschränkte Funktion des Sicherheitsmoduls (1) auch ohne Authentifikation möglich ist.

11. Sicherheitseinrichtung nach einem der vorhergehenden Ansprüche, **dadurch gekennzeichnet, dass** für verschiedene Geräte (5, 6) verschiedene Authentifikations-Merkmale vorgesehen sind.

12. Sicherheitseinrichtung nach einem der vorhergehenden Ansprüche, **dadurch gekennzeichnet, dass** im Sicherheitsmodul (1) weitere Funktionen implementiert sind, die einen hohen Datenschutz erfordern.

13. Sicherheitseinrichtung nach Anspruch 12, **dadurch gekennzeichnet, dass** die weiteren Funktionen (7) eine Prüfung von verschlüsselten Fahrzeug-Zugangssignalen umfassen.

14. Sicherheitseinrichtung nach Anspruch 12, **dadurch gekennzeichnet, dass** die weiteren Funktionen eine Wegfahrsperre enthalten.
